# EUROPÄISCHE PATENTSCHRIFT

(11) **EP 0 547 259 B1**
(45) Veröffentlichungstag und Bekanntmachung des Hinweises auf die Patenterteilung: **17.04.1996**
(21) Anmeldenummer: 91121609.1
(22) Anmeldetag: 17.12.1991
(51) Int. Cl.: G05B 19/04

(54) **Schaltungsanordnung zum Sichern des Betriebes eines rechnergesteuerten Gerätes**
Circuit for securing the operation of a computer-controlled apparatus
Circuit pour la sûreté de fonctionnement d'un appareil à commande par calculateur

(43) Veröffentlichungstag der Anmeldung: 23.06.1993
(73) Patentinhaber: SIEMENS AKTIENGESELLSCHAFT, D-80333 München (DE)
(72) Erfinder: Graf, Friedrich, Dipl.-Ing., W-8400 Regensburg (DE); Niedermeier, Ernst, Dipl.-Ing., W-8402 Neutraubling (DE); Stärker, Klaus, Dr.-Ing., W-8402 Neutraubling (DE); Flaig, Jörg, Dipl.-Ing., W-8024 Oberhachingen (DE)

(56) Entgegenhaltungen:
- EP-A- 0 198 170
- EP-A- 0 211 766
- DE-A- 3 345 863

## Beschreibung

Die Erfindung betrifft eine Schaltungsanordnung nach dem Oberbegriff von Anspruch 1. Wichtig sind solche Schaltungsanordnungen beispielsweise für die Überwachung von Steuergeräten in Kraftfahrzeugen, wie zum Beispiel Getriebe-, Motor-, Einspritz- und Zündsteuerungen, bei denen ein sicherer Betrieb unerläßlich ist.

Überwachungs- und Rücksetzschaltungen für Mikrorechner sind in vielen Ausführungen bekannt (Electronic Design 2 (18.01.1977) Seiten 90 und 92; DE 34 21 584 A1). Ein Mikrorechner oder Mikrocontroller wird durch ein zusätzliches Bauteil - teilweise als "Watchdog" bezeichnet - auf korrekten Programmablauf überwacht. Der Mikrorechner muß dabei definierte Signalimpulse an den Watchdog liefern: ein Ausbleiben der Impulse oder eine Abweichung vom definierten Verlauf bewirkt, daß die Wachtdog-Schaltung ein elektrisches Rücksetz- oder Reset-Signal an den Mikrorechner abgibt, durch welches dieser veranlaßt wird, an eine definierte Adresse in seinem Programmspeicher zu springen und erneut mit dem Abarbeiten von Routinen zu beginnen. Damit wird verhindert, daß bei Fehlern bei der Abarbeitung des Steuergeräteprogramms das Steuergerät unkontrollierte Signale ausgibt. Die Routine zum Erzeugen der Signalimpulse ist dabei so gestaltet, daß nur bei einem einwandfreien Programmablauf die Impulse an den Watchdog gegeben werden. Diese Überwachung hat den Nachteil, daß ein zusätzliches externes Bauteil notwendig ist. Außerdem ist nicht völlig auszuschließen, daß die genannte Routine selbst bei fehlerhaftem Programmablauf weiter Signalimpulse erzeugt.

Die Überwachungsschaltung kann auch auf dem gleichen Chip wie der Mikrorechner angeordnet sein - sogenannter "on-chip-Watchdog" - und muß dann erst von dem Steuergeräteprogramm eingeschaltet werden (DE-A1-3345863). Somit sind Fehler, bei denen das Steuergeräteprogramm gar nicht abläuft, nicht zu beheben. Dies ist vor allem dann von Nachteil, wenn die Überwachungsschaltung nicht nur einen Rechner-Reset auslösen soll, sondern auch das gesteuerte Gerät, z.B. die Aktuatoren oder Stellglieder in einer Getriebesteuerung, so beeinflussen soll, das letztere aus Sicherheitsgründen einen passiven Zustand einnehmen.

Der Erfindung liegt die Aufgabe zugrunde, eine Schaltungsanordnung zu schaffen, die die größtmögliche Sicherheit bei dem Betrieb eines rechnergesteuerten Steuergerätes gewährleistet.

Diese Aufgabe wird erfindungsgemäß durch die Schaltungsanordnung nach Anspruch 1 gelöst. Vorteillhafte Weiterbildungen der Erfindung sind den Unteransprüchen zu entnehmen.

Die Vorteile der erfindungsgemäßen Schaltungsanordnung liegen u.a. darin, daß mit ihr im Fehlerfall auch eine Programmdiagnose durchgeführt werden kann.

Ein Ausführungsbeispiel der Erfindung wird im folgenden anhand der Zeichnung erläutert. Es zeigen:
- Figur 1: eine Schaltungsanordnung nach der Erfindung als Blockschaltbild,
- Figur 2: eine Überwachungsschaltung der Schaltungsanordnung nach Figur 1,
- Figur 3: eine Rücksetzschaltung der Schaltungsanordnung nach Figur 1,
- Figur 4: den zeitlichen Verlauf mehrerer Signale der Schaltung nach Figur 3, und
- Figur 5: ein Flußdiagramm zur Erläuterung der Funktion der Schaltungsanordnung nach Figur 1.

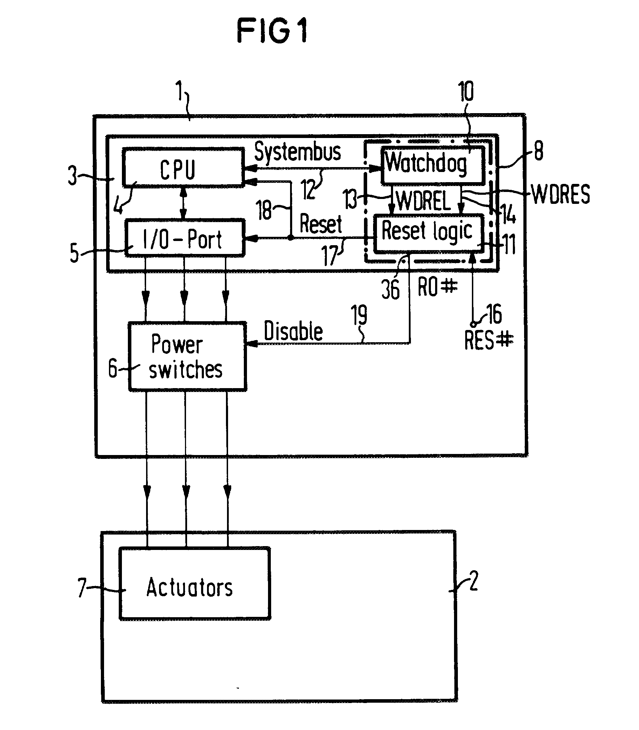

Ein rechnergesteuertes Steuergerät 1 (Figur 1) dient zum Steuern eines Gerätes 2, das im folgenden als gesteuertes Gerät bezeichnet wird. Beispielsweise handelt es sich dabei um eine elektronische Getriebesteuerung, die ein automatisches Kraftfahrzeug-Getriebe steuert. Das Steuergerät 1 enthält einen Mikrorechner oder Mikrocontroller 3, der im wesentlichen aus einer Zentraleinheit oder CPU 4, aus im einzelnen nicht dargestellten Speichern und aus Ein- und Ausgabeports 5 besteht. Über diese Ports 5 werden Leistungsschalter 6 gesteuert die ihrerseits Aktuatoren 7 in dem gesteuerten Gerät 2 schalten.

Eine Überwachungs- und Sicherungsschaltung 8, die auf dem gleichen Chip wie der Mikrorechner 3 angeordnet ist, enthält eine Überwachungsschaltung 10 - im folgenden auch als Watchdog bezeichnet - und eine Rücksetzschaltung 11 - im folgenden auch als Reset-Logik bezeichnet -. Der Watchdog 10 ist durch einen Systembus 12 mit der Zentraleinheit 4 und durch zwei Signalleitungen 13 und 14 mit zwei Eingängen der Reset-Logik 11 verbunden. Ein weiterer Eingang der Reset-Logik 11 ist mit einem Reset-Pin oder -Anschluß 16 der Schaltungsanordnung 1 verbunden.

Ein Resetausgang der Reset-Logik 11 ist durch Signalleitungen 17 und 18 mit einem Steuereingang der Ein- und Ausgabe-Ports 5 und mit einem Rückstelleingang der Zentraleinheit 4 verbunden. Ein weiterer Ausgang der Reset-Logik 11, der einen Pin des Mikrorechners 3 darstellt, an welchem ein Sperrsignal RO# abgegeben wird, ist durch eine Ausgangsleitung 19 mit einem Sperr- oder Disable-Eingang der Leistungsschalter 6 verbunden.

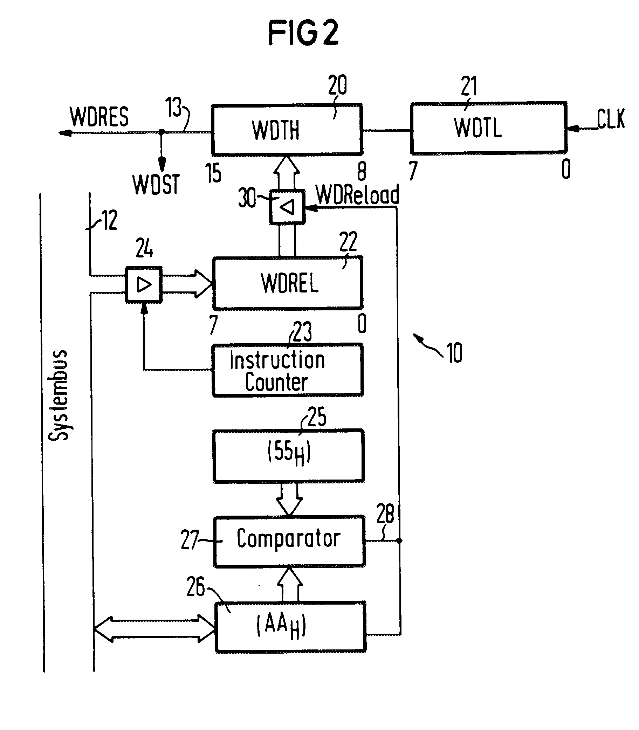

Die Watchdog-Schaltung 10 (Figur 2) weist einen Zeitgeber auf, der aus einem einschreibbaren Vorwahlzähler 20 und einem vorgeschalteten Zähler 21 besteht: beide sind als Rückwärtszähler ausgebildet. Der acht Bit breite Zähler 21 setzt das an seinem Eingang anliegende Taktsignal CLK um den Faktor 256 herab und gibt es auf den Eingang des Vorwahlzählers 20. Dieser zählt von einem in ihn eingeschriebenen Wert abwärts und gibt beim Erreichen des Wertes null an seinem Ausgang ein Rücksetzsignal WDRES (Watchdog-Reset) ab. Ein Register 22 wird von der Zentraleinheit 4 des Mikrorechners 3 über den Systembus mit einem Rückladewert WDREL geladen, der einer definierten Zeitspanne entspricht, nach der der Vorwahlzähler 20 abläuft.

Der Rückladewert WDREL muß innerhalb einer vorbestimmten Anzahl von Befehlen nach einem System-Reset (Signal RESET) eingeschrieben werden. Die Anzahl der Befehle wird dabei von einem Befehlszähler 23 gezählt, der mit einem Schalter 24 verbunden ist. Wird WDREL nicht rechtzeitig geladen, so erfolgt ein System-Reset, d.h. der Mikrorechner wird rückgesetzt und der Leistungsschalter und/oder die I/O-Ports 5 werden inaktiviert.

Die Watchdog-Schaltung wird nach einem System-Reset automatisch wieder aktiviert und läuft nach der definierten Zeitspanne erneut ab, falls nicht innerhalb der vorgegebenen Anzahl von Befehlen der Rückladewert WDREL von der Zentraleinheit CPU in das Register 24 eingeschrieben wird.

Ein als Festwertspeicher ausgebildetes Register enthält einen festen Wert, z.B. die Hexadezimalzahl 55_{H}. Ein Kontrollregister 26 ist von dem Anwender programmierbar, und zwar einzelbitweise. Nach einem System-Reset sowie bei jedem Watchdog-Rückladen wird das Kontrollregister 26 mit dem Komplement des Vergleichswertes, in dem Beispiel mit der Zahl AA_{H}, vorbelegt. Ein Vergleicher 27 vergleicht den Inhalt des Registers 25 mit dem Inhalt des Kontrollregisters 26.

In das Kontrollregister 26 werden nach Ablauf der einzelnen Programm-Routinen in dem Mikrorechner 3 per Programm Bits gesetzt oder rückgesetzt, und zwar nach jeder Routine ein definiertes Bit. Die Bits in dem Kontrollregister 26, die nicht bedient werden, müssen jeweils invers zu dem zu beschreibenden Bit stehen. Dabei kann das Kontrollregister 26 ausschließlich in aufsteigender Reihenfolge beschrieben werden. Wird diese Reihenfolge nicht eingehalten, so bleibt das betreffende Bit unverändert. Ist das Bit-Muster in dem Kontrollregister 26 nach Abarbeiten der Routinen so verändert worden, daß es gleich dem in dem Register 25 fest eingespeicherten Wert ist, so wird die Watchdog-Schaltung 10 beim Beschreiben des letzten Bits des Kontrollregisters 26 aufgefrischt, indem der Vergleicher 26 ein Ausgangssignal WDReload über eine Leitung 28 abgibt. Dieses Signal schaltet zum einen einen Schalter 30 durch, so daß der Inhalt WDREL des Registers 22 in den Vorwahlzähler 20 geladen wird, und bewirkt andererseits, daß das Kontrollregister 26 mit dem Komplement des Vergleichswertes, in dem Beispiel mit dem Wert AA_{H}, vorbelegt wird.

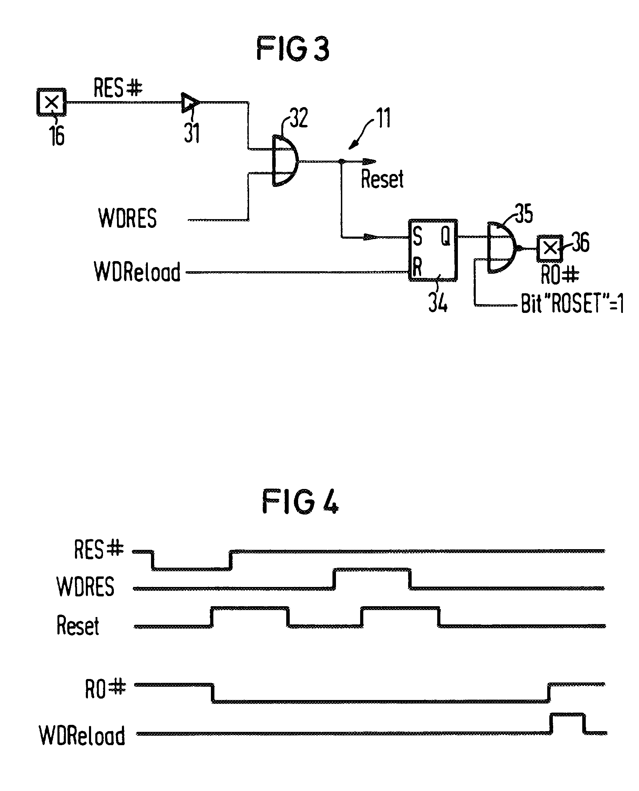

Werden einzelne Programm-Routinen nicht abgearbeitet, so stimmt das Bitmuster in dem Kontrollregister 26 nicht mit dem Vergleichswert in dem Register 25 überein. Der Watchdog-Zeitgeber 20, 21 wird nicht nachgeladen, er läuft also ab und generiert einen Watchdog-Reset WDRES, setzt ein Watchdog-Status-Flag WDST und aktiviert den Ausgang 19 des Mikrorechners 3, wobei er das Sperr- oder Disable-Signal RO# abgibt (vgl. auch Figur 3). Das Kontrollregister 26 wird durch den Watchdog-Reset nicht beeinflußt, so daß es anschließend per Programm ausgewertet werden kann und damit nicht abgearbeitete Programm-Routinen festgestellt werden können. Die Watchdog-Schaltung 10 bietet damit die Möglichkeit, die unterschiedlichen Programm-Routinen zu überwachen, d.h. eine Programmdiagnose durchzuführen.

Die Verknüpfung und Auswertung der vorstehend erwähnten Signale erfolgt in der Rücksetzschaltung 11 (Figur 3). Ein an dem Reset-Pin 16 anliegendes Reset-Signal RES# (in dem Zustand "low" aktiv) gelangt über einen Invertierer 31 zu einem ODER-Glied 32. An dessen anderen Eingang wird das Watchdog-Reset-Signal WDRES gelegt. Von dem Ausgang des ODER-Gliedes 32 wird das den Mikrorechner 3 rücksetzende Signal RESET (System-Reset) abgegeben.

Das Signal RESET gelangt auch zur dem S-Eingang eines Flip-Flops 34, an dessen R-Eingang das Signal WDReload gelegt wird. Der Q-Ausgang des Flip-Flops 34 ist mit einem Eingang eines NOR-Glied 35 verbunden. An den zweiten Eingang dieses Gliedes wird ein Flag-Bit ROSET gelegt. Durch Setzen von ROSET = 1 wird der Reset-Ausgang des Mikrorechners 3 von dem Steuergeräteprogramm auf 0 (oder "low") gesetzt. Damit kann auch von dem Steuergerät aus das Sperrsignal RO# auf der Leitung abgegeben und damit die angeschlossenen Aktuatoren gesperrt werden. Der Ausgang des NOR-Gliedes 35 ist mit einem Pin 36 verbunden, das den Reset-Ausgang des Mikrorechners 3 darstellt, an das die Ausgangsleitung 19 angeschlossen ist und an dem das Signal RO# ausgegeben wird. Als RESET-Quellen wirken somit das Reset-Signal RES# (mit Zustand "low") oder das Watchdog-Reset-Signal WDRES (mit Zustand "high"), die über das ODER-Glied 32 das Signal RESET liefern, durch das der Mikrorechner 3 zurückgesetzt wird. Außerdem werden durch das Disable-Signal R0# (Zustand "low") die Eingangs-/Ausgangs-Ports 5 und/oder die Leistungsschalter 6 gesperrt und damit das zu steuernde Gerät 2 in einen sicheren Zustand gebracht wird.

Das Signal R0# geht erst dann wieder in den Zustand "high", wenn alle Programm-Routinen abgearbeitet und somit die Kontrollbits in dem Kontrollregister 26 gesetzt worden sind, und zwar in der richtigen Reihenfolge. Diese Zustandsänderung erfolgt mit dem Rücklade-Signal WDReload.

Aus Figur 4 ist der zeitliche Verlauf der Steuersignale erkennbar, die in der vorstehenden Beschreibung der erfindungsgemäßen Schaltungsanordnung erwähnt worden sind, und zwar von oben nach unten: das Reset-Signal RES#, das Watchdog-Rücksetz-Signal WDRES, das System-Rücksetz-Signal Reset, das Disable- oder Sperr-Signal RO# und das Watchdog-Rücklade-Signal WDReload.

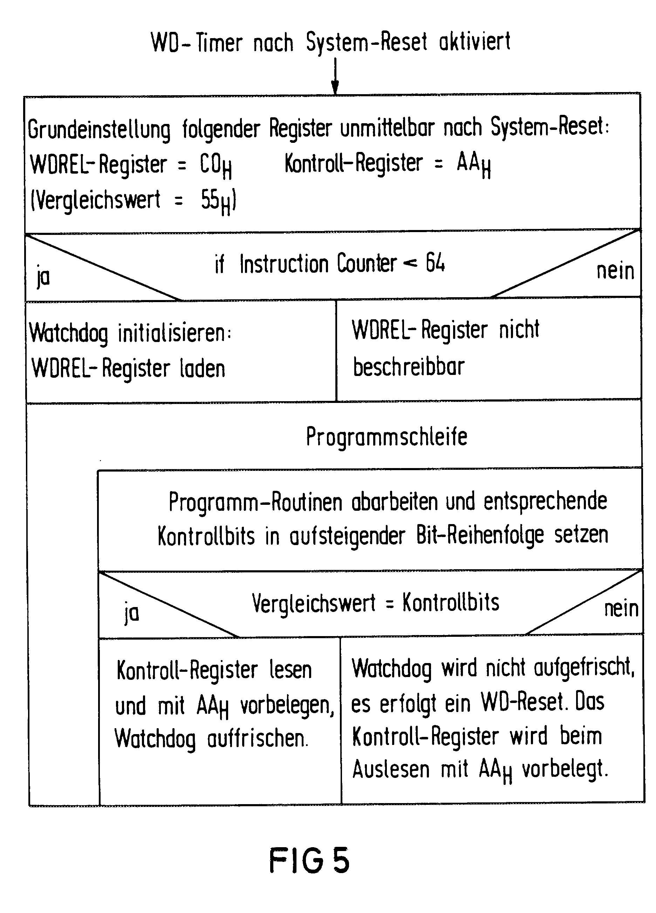

In dem aus Figur 5 ersichtlichen Ablaufdiagramm ist die vorstehend erläuterte Wirkungsweise der erfindungsgemäßen Schaltungsanordnung zusammenhängend im Überblick dargestellt.

## Patentansprüche

1. Schaltungsanordnung zum Sichern des Betriebes eines rechnergesteuerten Steuergerätes, durch die im Falle einer Fehlfunktion ein Signal an den Reset-Eingang des Rechners gelegt und dadurch der Rechner neu gestartet wird,
**dadurch gekennzeichnet**, daß sie aufweist
- ein erstes Register (25), in das ein vorgegebenes Bitmuster fest eingeschrieben ist,
- ein Kontrollregister (26), in dem nach Ablauf einzelner Programm-Routinen jeweils ein einzelnes definiertes Bit gesetzt wird, und
- einen Vergleicher (27), durch den der Inhalt des Kontrollregister (26) jeweils mit dem Inhalt des ersten Registers (25) verglichen und bei Übereinstimmung ein Rückladesignal abgegeben wird, durch das ein Vorwahlzähler (20) neu geladen wird, während bei Nichtübereinstimmung das Rückladesignal ausbleibt, wodurch der Vorwärtszähler (20) abläuft und ein Signal an den Reset-Eingang des Rechners gelegt wird.

2. Schaltungsanordnung nach Anspruch 1, dadurch gekennzeichnet, daß das Beschreiben des Kontrollregister (26) nur in aufsteigender Richtung zulässig ist.

3. Schaltungsanordnung nach Anspruch 1, dadurch gekennzeichnet, daß sie ein zweites Register (22) aufweist, das von dem Rechner beschrieben und dessen Inhalt in den Vorwahlzähler (20) geladen wird.

4. Schaltungsanordnung nach Anspruch 3, dadurch gekennzeichnet, daß der Vorwahlzähler (20) als Abwärtszähler ausgebildet ist, von dem bei Erreichen des Wertes null ein Rücksetzsignal (WDRES) abgegeben wird.

5. Schaltungsanordnung nach Anspruch 4, dadurch gekennzeichnet, daß sie eine Rücksetzschaltung (11) aufweist, an deren ersten Eingang ein externes Rücksetzsignal (RES#), an dessen zweiten Eingang das Rücksetzsignal des Vorwahlzählers (20) und an dessen dritten Eingang das Rückladesignal (WDReload) gelegt wird.

6. Schaltungsanordnung nach Anspruch 5, dadurch gekennzeichnet, daß bei Anliegen eines der Rücksetzsignale an einem der beiden Eingänge der Rücksetzschaltung (11) an einem ersten Ausgang der Rücksetzschaltung ein Rücksetzsignal (RESET) an den Rechner (3) gegeben wird, und daß an einem zweiten Ausgang (36) der Rücksetzschaltung (11) ein Sperrsignal (Disable) abgegeben wird, durch das das Gerät (2) in einen sicheren Zustand gebracht wird.

7. Schaltungsanordnung nach Anspruch 5, dadurch gekennzeichnet, daß bei Anliegen des Rückladesignals (WDReload) an dem Eingang der Rücksetzschaltung (11) an einem zweiten Ausgang der Rücksetzschaltung ein Freigabesignal abgegeben wird, durch das dem Steuergerät (1) ermöglicht wird das Gerät (2) zu steuern.

8. Schaltungsanordnung nach Anspruch 1, dadurch gekennzeichnet, daß sie einen Befehlszähler (24) aufweist, von dem die von der Zentraleinheit (4) des Rechners (3) abgearbeiteten Befehle gezählt und bei Erreichen einer vorgegeben Anzahl Befehle das weitere Einschreiben in das zweite Register (22) gesperrt wird.

9. Schaltungsanordnung nach Anspruch 1, dadurch gekennzeichnet, daß die Bits in dem Kontrollregister (26), die jeweils nicht gesetzt werden, einen dem zu setzenden Bit inversen Wert einnehmen.

## Claims

1. Circuit for securing the operation of a computer-controlled control device, by which, in the event of a malfunction, a signal is applied to the reset input of the computer and the computer is thereby restarted,
characterized in that it has
- a first register (25), in which a predetermined bit pattern is written in a read-only manner,
- a check register (26), in which a single defined bit is set in each case after individual program routines have been executed, and
- a comparator (27), by which the content of the check register (26) is in each case compared with the content of the first register (25) and if they match a reload signal is issued, by which a preset counter (20) is reloaded, whereas if they do not match the reload signal is not issued, as a result of which the preset counter (20) runs down and a signal is applied to the reset input of the computer.

2. Circuit according to Claim 1, characterized in that the writing to the check register (26) is permissible only in an ascending direction.

3. Circuit according to Claim 1, characterized in that it has a second register (22), which is written to by the computer and the content of which is loaded into the preset counter (20).

4. Circuit according to Claim 3, characterized in that the preset counter (20) is designed as a decrementing counter, from which a reset signal (WDRES) is issued when the value zero is reached.

5. Circuit according to Claim 4, characterized in that it has a reset circuit (11), to the first input of which an external reset signal (RES#) is applied, to the second input of which the reset signal of the preset counter (20) is applied and to the third input of which the reload signal (WDReload) is applied.

6. Circuit according to Claim 5, characterized in that, when one of the reset signals is present at one of the two inputs of the reset circuit (11), a reset signal (RESET) is passed to the computer (3) at a first output of the reset circuit, and in that a disabling signal (Disable) is issued at a second output (36) of the reset circuit (11), by which signal the device (2) is brought into a secured state.

7. Circuit according to Claim 5, characterized in that, when the reload signal (WDReload) is present at the input of the reset circuit (11), an enabling signal is issued at a second output of the reset circuit, by which signal the control device (1) is made able to control the device (2).

8. Circuit according to Claim 1, characterized in that it has an instruction counter (24), by which the instructions executed by the central processing unit (4) of the computer (3) are counted and further writing to the second register (22) is disabled when a predetermined number of instructions is reached.

9. Circuit according to Claim 1, characterized in that the bits in the check register (26) which at a given time are not set assume a value inverse to the bit to be set.

## Revendications

1. Montage pour garantir le fonctionnement d'un appareil de commande commandé par ordinateur et grâce auquel, dans le cas d'un fonctionnement erroné, un signal est appliqué à l'entrée de remise à l'état initial de l'ordinateur et de ce fait l'ordinateur démarre à nouveau,
caractérisé en ce qu'il comporte
- un premier registre (25), dans lequel est mémorisé de façon fixe un mot binaire prédéterminé,
- un registre de contrôle (26) dans lequel un bit individuel défini est positionné après l'exécution de chaque sous-programme, et
- un comparateur (27) au moyen duquel le contenu du registre de contrôle (26) est comparé respectivement au contenu du premier registre (25) et, en cas de coïncidence, est délivré un signal de recharge au moyen duquel un compteur de présélection (20) est à nouveau chargé, alors qu'en cas de non coïncidence, le signal de recharge est absent, ce qui a pour effet que le compteur de présélection (20) atteint sa position finale et qu'un signal est envoyé à l'entrée de remise à l'état initial de l'ordinateur.

2. Montage selon la revendication 1, caractérisé en ce que le chargement du registre de contrôle (26) est autorisée uniquement dans le sens croissant.

3. Montage selon la revendication 1, caractérisé en ce qu'il comporte un second registre (22) chargé par l'ordinateur et dont le contenu est chargé dans le compteur de présélection (20).

4. Montage selon la revendication 3, caractérisé en ce que le compteur de présélection (20) est réalisé sous la forme d'un décompteur, qui délivre un signal de remise à l'état initial (WDRES), lorsqu'il atteint la valeur zéro.

5. Montage selon la revendication 4, caractérisé en ce qu'il comporte un circuit de remise à l'état initial (11), à la première entrée duquel est appliqué un signal externe de remise à l'état initial (RES#), à la seconde entrée duquel est appliqué le signal de remise à l'état initial du compteur de présélection (20) et à la troisième entrée duquel est appliqué le signal de recharge (WDReload).

6. Montage selon la revendication 5, caractérisé en ce que, lors de l'application des signaux de remise à l'état initial à l'une des deux entrées du circuit de remise à l'état initial (11), un signal de remise à l'état initial (RESET) délivré par une première sortie du circuit de remise à l'état initial est envoyé à l'ordinateur (3), et qu'à une seconde sortie (36) du circuit de remise à l'état initial (11) est délivré un signal d'invalidation (Disable), au moyen duquel l'appareil (2) est placé dans un état de sécurité.

7. Montage selon la revendication 5, caractérisé en ce que lors de l'application du signal de recharge (WDReload) à l'entrée du circuit de remise à l'état initial (11), sur une seconde sortie du circuit de remise à l'état initial est délivré un signal de libération, qui permet à l'appareil de commande (1) de commander l'appareil (2).

8. Montage selon la revendication 1, caractérisé en ce qu'il comporte un compteur d'instructions (24) qui compte les instructions élaborées par l'unité centrale (4) de l'ordinateur (3), et en ce que lorsqu'un nombre prédéterminé d'instructions est atteint, un nouveau chargement dans le second registre (22) est empêché.

9. Montage selon la revendication 1, caractérisé en ce que les bits, présents dans le registre de contrôle (26) mais non positionnés, prennent une valeur inverse de celle du bit devant être positionné.
